Europäisches Patentamt

(19) European Patent Office

Office européen des brevets

(11) Numéro de publication : **0 290 302 B1**

(12) **FASCICULE DE BREVET EUROPEEN**

(45) Date de publication du fascicule du brevet :
08.05.91 Bulletin 91/19

(51) Int. Cl.⁵ : **G01F 23/36, H01C 10/08,**
**H01C 17/28**

(21) Numéro de dépôt : 88400786.5

(22) Date de dépôt : 31.03.88

(54) **Dispositif de mesure comprenant un transducteur du type rhéostat, en particulier pour la mesure de carburant dans le réservoir d'un véhicule automobile.**

(30) Priorité : 06.04.87 FR 8704815

(43) Date de publication de la demande :
09.11.88 Bulletin 88/45

(45) Mention de la délivrance du brevet :
08.05.91 Bulletin 91/19

(84) Etats contractants désignés :
DE ES FR GB IT

(56) Documents cités :
EP-A- 0 023 949
DE-A- 2 121 729
DE-A- 3 140 979
GB-A- 2 048 495

(73) Titulaire.: JAEGER
2, rue Baudin
F-92303 Levallois-Perret (FR)

(72) Inventeur : Vervaet , Jacques
4, rue Maurice Thorez
F-92000 Nanterre (FR)

(74) Mandataire : Schrimpf, Robert et al
Cabinet Regimbeau 26, Avenue Kléber
F-75116 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne le domaine des dispositifs de mesure comprenant un transducteur du type rhéostat.

La présente invention trouve tout particulièrement application dans la conception de dispositifs de mesure comprenant un transducteur du type rhéostat, destinés à la mesure du niveau et/ou volume du carburant dans le réservoir d'un véhicule automobile.

On a déjà proposé de nombreux dispositifs destinés à cette application particulière comprenant un équipage mobile pourvu d'un flotteur apte à suivre le niveau d'un liquide et associé au curseur d'un rhéostat, de telle sorte que ce dernier fournisse une information représentative de la position du flotteur et donc du niveau et/ou du volume de liquide.

On ainsi déjà proposé des rhéostats formés d'un support en matériau électriquement isolant revêtu d'une piste en matériau électriquement résistant, de résistivité contrôlée, sur laquelle se déplace le curseur associé à l'équipage mobile.

Les rhéostats du type précité ont pour inconvénient de présenter une dérive dans le temps, en raison de l'usure inévitable de la piste de résistivité contrôlée, résultant du frottement occasionné par le curseur mobile.

Pour éliminer cet inconvénient, la Demanderesse a proposé et réalisé des rhéostats formés d'un support en matériau électriquement isolant, notamment en verre, revêtu d'une piste principale en matériau électriquement résistant, de résitivité contrôlée, et d'une pluralité de pistes secondaires séparées, réalisées en matériau électriquement conducteur, raccordées de façon échelonnée à la piste principale résistive et s'étendant chacune en regard du trajet de déplacement du curseur. L'information représentative du niveau ou volume de liquide est prélevée entre l'une des extrémités de la piste principale et le curseur.

Les rhéostats ainsi proposés par la Demanderesse ont déjà rendu de grands services. De tels rhéostats sont décrits dans les documents GB-A-2048495, EP-A-0023949 et DE-A-3140979. Le document DE-A-2121729 décrit un rhéostat tel que celui défini dans le préambule de la revendication 1.

La présente invention a cependant pour but de perfectionner encore ceux-ci en les rendant surtout plus fiables et plus économiques.

Ces buts sont atteints dans le cadre de la présente invention grâce à un dispositif de mesure comprenant un transducteur du type rhéostat, formé d'un support en matériau électriquement isolant revêtu d'une piste principale en matériau électriquement résistant, de résistivité contrôlée, et d'une pluralité de pistes secondaires séparées, réalisées en matériau électriquement conducteur, raccordées de façon échelonnée à la piste principale résistive et s'étendant chacune en regard du trajet de déplacement d'un curseur, chacune des pistes secondaires étant couverte partiellement d'un revêtement en matériau plus résistant à l'usure, carctérisé par le fait que le revêtement est localisé en regard du trajet de déplacement du curseur et réalisé dans le même matériau que la piste principale.

Grâce à un tel revêtement, on évite tout défaut ou dérive de fonctionnement du rhéostat, susceptible de résulter par le passé de l'usure des pistes secondaires, et on obtient en même temps la possibilité de le fabriquer d'une manière plus simple et économique.

Selon une autre caractéristique avantageuse de l'invention, ledit revêtement et la piste principale sont réalisés par dépôt sérigraphique simultané, du même matériau, sur les pistes secondaires. Grâce à cette disposition, le dépôt dudit revêtement, ne complique pas et n'allonge pas le processus de fabrication des transducteurs.

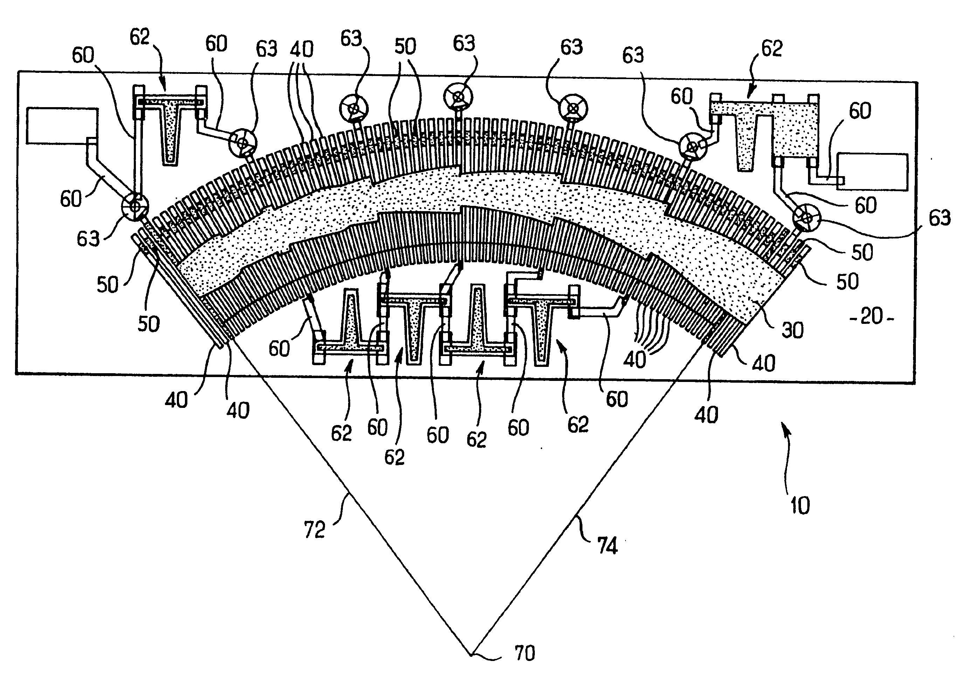

D'autres caractéristiques, buts et avantages de la présente invention apparaîtront à la lecture de la description détaillée qui va suivre et à l'examen du dessin unique annexé qui représente schématiquement une vue en plan du dispositif conforme à la présente invention.

On aperçoit sur la figure annexée, un rhéostat 10 formé d'un support 20 revêtu d'une piste principale 30, d'une pluralité de pistes secondaires 40 et d'un même nombre de revêtements 50.

Le support 20 est formé d'une plaque plane en matériau électriquement isolant, par exemple en céramique, alumine, ou de préférence en verre.

Dans un premier temps, le support 20 est revêtu des pistes secondaires 40. Celles-ci sont formées d'un matériau électriquement conducteur. Les pistes secondaires 40 sont de préférence réalisées par dépôt sérigraphique.

Dans un second temps, la piste principale 30 et les revêtements 50 sont déposés, là encore de préférence par sérigraphie, sur les pistes secondaires 40.

La piste principale 30 et les revêtements 50 sont réalisés en un matériau électriquement résistant, de résistivité contrôlée.

Les pistes secondaires 40 sont séparées l'une de l'autre et raccordées de façon échelonnée à la piste principale 30. Les pistes secondaires 40 s'étendent en regard du trajet en déplacement du curseur.

Les revêtements 50 recouvrent partiellement les pistes secondaires 40. Ils sont localisés en regard du trajet en déplacement du curseur.

Bien entendu les revêtements 50 sont séparés les uns des autres pour ne pas court-circuiter les pistes secondaires 40.

Par ailleurs des pistes de liaison en matériau électriquement conducteurs sont déposées sur le support 20. Les pistes de liaison 60 prolongent certaines choisies des pistes secondaires 40.

Les pistes de liaison 60 peuvent être réalisées simultanément ou postérieurement aux pistes secondaires 40.

Certaines des pistes de liaison 60, reliées aux pistes secondaires extrêmes du rhéostat permettent la mesure de résistance totale de la piste principale 30 et/ou la résistance définie entre l'une des extrémités de la piste principale 30 et le curseur.

Les autres pistes de liaison 60, reliées à des pistes secondaires intermédiaires 40, sont reliées par paires à des éléments électriquement résistants 62. Ceux-ci sont avantageusement réalisés par dépôt sérigraphique simultanément à la piste principale 30 et aux revêtements 40. Les éléments 62 sont ainsi reliés en parallèle de sections déterminées de la piste principale 30. Les éléments 62 peuvent être réglés au laser pour ajuster avec précision la résistance globale de sections correspondantes du rhéostat, afin d'éliminer les dispersions de fabrication.

Au cours du réglage précité des éléments 62, à l'aide d'un laser, la résistance aux bornes de ces éléments (et donc aux bornes des sections correspondantes du rhéostat) est mesurée au niveau de plots conducteurs 63 reliés aux bornes des éléments 62.

L'élimination des dispersions de fabrication à l'aide des éléments réglables 62 est classique en soi et ne sera donc pas décrite plus en détail par la suite.

Plus précisément encore, le rhéostat illustré sur le dessin annexé est destiné à coopérer avec un équipage mobile à levier pivotant, pourvu d'un flotteur adapté pour suivre le niveau de carburant contenu dans le réservoir d'un véhicule automobile ; l'équipage mobile portant par ailleurs le curseur du rhéostat, pour déplacer le curseur sur les revêtements 50.

De nombreux équipages pivotants pourvus d'un flotteur ont déjà été proposés. Pour cette raison, l'équipage coopérant avec le rhéostat n'a pas été représenté sur la figure annexée pour simplifier l'illustration.

Cependant sur la figure annexée, on a référencé 70 l'axe de pivotement du levier portant le curseur et l'on a illustré schématiquement sous les références 72 et 74 deux positions extrêmes du levier pivotant.

Dans la mesure où le rhéostat 10 coopère avec un curseur pivotant autour de l'axe 70, les pistes secondaires 40 sont formées généralement de segments rectilignes d'extension radiale par rapport à l'axe 70, constitués de secteurs séparés, équidistants et de même amplitude angulaire d'une couronne centrée sur l'axe 70.

La piste principale 30 a la forme générale d'un secteur continu de couronne superposé aux pistes secondaires 40. La largeur (ou étendue radiale) de la piste principale est modulée (lors du dépôt sérigraphique) pour définir une évolution de la résistance de la piste principale 30, tenant compte de la géométrie du réservoir.

De même les revêtements 50 sont formés de secteurs séparés d'une couronne centrée sur l'axe 70.

On notera que la valeur effective de la résistance des dépôts résistifs (30 et 50) est donnée par la loi classique $R = \rho l/s$.

Cependant pour la piste principale 30 le courant circule parallèlement au support plan 20 ; la longueur $l_1$ correspond par conséquent à la distance séparant les paires de pistes secondaires 40 adjacentes, tandis que la section $S_1$ est déterminée par le produit de l'épaisseur du dépôt et de son amplitude radiale.

Par contre pour les revêtements 50, le courant circule perpendiculairement au support plan 20 ; la longueur $l_2$ correspond par conséquent à l'épaisseur des revêtements, tandis que la section $S_2$ est égale à la surface de recouvrement des pistes secondaires 40.

Il en résulte que par unité carrée des dépôts résistifs, le rapport des résistances entre la piste principale 30 et les revêtements 50 est proportionnel au carré du rapport entre le côté du carré considéré et l'épaisseur des dépôts.

De ce fait, la résistance ajoutée par dépôt des revêtements 50 est négligeable et constante d'une piste secondaire à l'autre.

Selon un mode de réalisation considéré actuellement comme préférentiel, mais donné à titre d'exemple non limitatif, le rhéostat conforme à la présente invention répond aux caractéristiques suivantes :

– la plaque support 10 est réalisée en alumine ; elle possède une largeur de l'ordre de 17 mm et une longueur de l'ordre de 51 mm.

– Il est prévu 80 pistes secondaires 40. Celles-ci sont formées de segments rectilignes d'extension radiale par rapport à l'axe 70 constitués de secteurs séparés, équidistants et de même amplitude angulaire d'une couronne centrée sur l'axe 70 couvrant un secteur angulaire total de l'ordre de 80°. Au niveau de leur extrémité radialement la plus extérieure, les pistes secondaires 40 ont une largeur de l'ordre de 0,2 mm, et l'espacement entre deux pistes secondaires adjacentes 40 est de l'ordre de 0,2 mm. La longueur radiale des pistes secondaires 40 est de l'ordre de 8 mm. Les pistes secondaires 40 sont réalisées par sérigraphie à base d'une pâte électriquement conductrice du type Pd/Ag, telle que la pâte commercialisée par la Société Dupont de Nemours sous la référence 6120. Cette pâte possède une résistivité de l'ordre de 2 m$\Omega/_\square$. La rugosité Ra des pistes secondaires 40 est comprise entre 0,2 et 0,6 µm.

– Les revêtements 50 sont formés de 80 plages couvrant respectivement, en partie, l'une des pistes secondaires 40. Les revêtements 50 sont placés radialement sur l'extérieur de la piste principale 30, en regard du trajet de déplacement du curseur. Les revêtements 50 ont chacun une largeur comprise entre 0,1 et 0,3 mm de préférence de l'ordre de 0,2 mm, une longueur radiale comprise entre 1 et 3 mm, de préférence de l'ordre de 2 mm et une épaisseur comprise entre 5 et 15 μm mesurée après cuisson, de préférence de l'ordre de 11 μm. Les revêtements 50 sont réalisés par dépôt sérigraphique d'une pâte électriquement résistante à base d'oxyde de ruthénium, par exemple la pâte commercialisée par la Société Dupont de Nemours sous la référence 1613. Cette pâte possède une résistance de 25 $\Omega/_\square$ pour une épaisseur de 25 μm à l'état sec non cuit, soit une épaisseur cuite de l'ordre de 11μm. La rugosité Ra des revêtements 50 est comprise entre 0,2 et 0,4 μm,

– La piste principale 30 est réalisée par dépôt sérigraphique, simultanément aux revêtements 50 et dans le même matériau que ceux-ci. La piste principale 30 est continue. Sa largeur radiale est de préférence modulée, comme illustré sur la figure annexée en fonction de la géométrie du réservoir, de telle sorte que l'information prélevée, (i.e. la mesure de la résistance entre une extrémité de la piste principale 30, et le curseur), soit toujours proportionnelle au volume de liquide contenu dans le réservoir.

– Le grain de contact du curseur, déplacé sur les revêtements 50 est réalisé à base d'un alliage Ag-Ni. La force de sollicitation de ce grain, contre les revêtements 50, est de l'ordre de 25 g.

Les essais réalisés par la Demanderesse sur un tel dispositif, dans un réservoir de carburant, n'ont révélé aucune sulfuration des revêtements 50 ; alors que dans les dispositifs antérieurs, il est apparu parfois, à long terme, une sulfuration des pistes secondaires 40, y compris au niveau de la zone de contact du curseur. Il s'agit là d'un avantage évident de l'invention.

Par ailleurs, les essais réalisés n'ont révélé aucune usure des revêtements 50. Au contraire, le grain de contact Ag/Ni du curseur a eu tendance à s'user par frottement sur les revêtements 50 ; mais cette usure du grain de contact du curseur n'est aucunement préjudiciable, elle ne modifie pas l'impédance du rhéostat et ne conduit à aucune dérive.

On notera par ailleurs que, dans le cadre de la présente invention, les pistes secondaires 40 électriquement conductrices ne sont pas sollicitées par le curseur. De ce fait, elles peuvent être réalisées en un matériau bon marché, présentant certes de bonnes propriétés de conduction électrique, mais n'exigeant pas des propriétés particulières de résistance mécanique, notamment à l'usure.

Comme indiqué précédemment, de façon préférentielle, les revêtements 50 sont réalisés par dépôt sérigraphique, simultanément au dépôt de la piste principale 30, et dans le même matériau que celle-ci. Ainsi le temps de fabrication des dispositifs n'est pas altéré.

Bien entendu la présente invention n'est pas limitée au mode de réalisation particulier qui vient d'être décrit, mais s'étend à toute variante conforme à son esprit.

Le dessin annexé et la description qui précède concernent un rhéostat destiné à coopérer avec un équipage mobile à levier pivotant ; en conséquence la piste principale 30, les pistes secondaires 40 et les revêtements 50 ont généralement la forme de secteurs de couronnes centrées sur l'axe 70 de pivotement de l'équipage.

La présente invention trouve également application dans le domaine des dispositifs de mesure comprenant un équipage guidé à translation. Dans ce cas les pistes déposées sur le support isolant 20, en particulier les revêtements 50, seront formées généralement de voies rectilignes et non plus de couronnes.

## Revendications

1. Dispositif de mesure comprenant un transducteur du type rhéostat, en particulier pour la mesure du carburant dans le réservoir d'un véhicule automobile, dans lequel le rhéostat est formé d'un support en matériau électriquement isolant (20) revêtu d'une piste principale (30) en matériau électriquement résistant, de résistivité contrôlée, et une pluralité de pistes secondaires (40) séparées, réalisées en matériau électriquement conducteur, raccordées de façon échelonnée à la piste principale (30) résistive et s'étendant chacune en regard du trajet de déplacement d'un curseur, chacune des pistes secondaires (40) étant couverte partiellement d'un revêtement (50) en matériau plus résistant à l'usure, caractérisé par le fait que le revêtement est localisé en regard du trajet de déplacement du curseur et réalisé dans le même matériau que la piste principale (30).

2. Dispositif de mesure selon la revendication 1, caractérisé par le fait que le revêtement (50) est réalisé par dépôt sérigraphique sur chaque piste secondaire (40).

3. Dispositif de mesure selon l'une des revendications 1 et 2, dans lequel de façon connue en soi, la piste principale (30) en matériau électriquement résistant est déposée par sérigraphie sur les pistes secondaires (40) en matériau électriquement conducteur, caractérisé par le fait que le revêtement (50) couvrant chaque piste secondaire (40) est réalisé par dépôt sérigraphique simultané sur les pistes secondaires (40).

4. Dispositif de mesure selon l'une des revendications 1 à 3, caractérisé par le fait que le revêtement (50) est réalisé en un matériau à base d'oxyde de ruthénium.

5. Dispositif de mesure selon l'une des revendications 1 à 4, caractérisé par le fait que le revêtement (50) possède une résistance de l'ordre de 25$\Omega/_\square$

6. Dispositif de mesure selon l'une des revendications 1 à 5, caractérisé par le fait que le revêtement (50) possède une rugosité Ra comprise entre 0,2 et 0,4 µm.

7. Dispositif de mesure selon l'une des revendications 1 à 6, caractérisé par le fait qu'il comprend en outre un équipage mobile à levier pivotant pourvu d'un flotteur apte à suivre le niveau d'un liquide et associé au curseur du rhéostat, et par le fait que les pistes secondaires (40) sont formées de secteurs de couronne, juxtaposés.

8. Dispositif de mesure selon l'une des revendications 1 à 7, caractérisé par le fait que le revêtement (50) déposé sur chaque piste secondaire possède une largeur comprise entre 0,1 et 0,3 mm en étant de préférence de l'ordre de 0,2 mm, une longueur comprise entre 1 et 3 mm, en étant de préférence de l'ordre de 2 mm, et une épaisseur comprise entre 5 et 15 µm après cuisson en étant de préférence de l'ordre de 11µm.

## Ansprüche

1. Meßvorrichtung mit einem Rheostattyp-Umwandler, insbesondere zur Treibstoffmessung im Tank eines Automobils, bei welcher der Rheostat von einem Träger (20) aus elektrisch isolierendem Werkstoff gebildet ist, der mit einer Hauptleiterbahn (30) aus elektrischem Widerstandsmaterial von kontrolliertem Widerstand überzogen ist, und von einer Mehrzahl separater sekundärer Leiterbahnen (40) aus elektrischem Leitermaterial, die in gestaffelter Weise mit der Widerstands-Hauptleiterbahn (30) verbunden sind und jeweils gegenüber dem Verschiebeweg eines Schiebers verlaufen, wobei jede sekundäre Leiternahn (40) teilweise mit einem Überzug (50) aus einem gegen Abnutzung stärker resistenten Werkstoff bedeckt ist, **dadurch gekennzeichnet, daß** der Überzug gegenüber dem Verschiebeweg des Schiebers lokalisiert und aus dem gleichen Material wie die Hauptleiterbahn (30) gefertigt ist.

2. Meßvorrichtung nach Anspruch 1, dadurch gekennzeichnet, daß der Überzug (40) durch Siebdruckabscheidung auf jeder sekundaren Leiterbahn (40) hergestellt ist.

3. Meßvorrichtung nach einem der Ansprüche 1 oder 2, bei der in an sich bekannter Weise die aus einem elektrischem Widerstandsmaterial bestehende Hauptleiterbahn (30) durch Siebdruck auf den aus einem elektrischen Leitermaterial bestehenden sekundären Leiterbahnen (40) abgeschieden ist, dadurch gekennzeichnet, daß der Überzug (40), der jede sekundäre Leiterbahn (40) bedeckt, durch gleichzeitige Siebdruckabscheidung auf die sekundären Leiterbahnen (40) hergestellt ist.

4. Meßvorrichtung nach einem der Ansprüche 1-3, dadurch gekennzeichnet, daß der Überzug (40) aus einem Material auf der Basis von Rutheniumoxyd hergestellt ist.

5. Meßvorrichtung nach einem der Ansprüche 1-4, dadurch gekennzeichnet, daß der Überzug (40) einen Widerstand in der Größenordnung von 25 $\Omega/_\square$ besitzt.

6. Meßvorrichtung nach einem der Ansprüche 1-5, dadurch gekennzeichnet, daß der Überzug (50) eine Rauhigkeit Ra zwischen 0,2 und 0,4 µm besitzt.

7. Meßvorrichtung nach einem der Ansprüche 1-6, dadurch gekennzeichnet, daß sie außerdem ein Schwenkhebel-Meßwerk umfasst, das mit einem dem Niveau einer Flüssigkeit nachfolgenden Schwimmer versehen und mit dem Schieber des Rheostats verbunden ist, und daß die sekundären Leiterbahnen (40) als nebeneinender liegende Kreisringsektoren ausgebildet sind.

8. Meßvorrichtung nach einem der Ansprüche 1-7, dadurch gekennzeichnet, daß der auf jeder sekundären Leiterbahn abgeschiedene Überzug (50) eine Breite zwischen 0,1 und 0,3 mm, vorzugsweise in der Größenordnung von 0,2 mm, eine Länge zwischen 1 und 3 mm, vorzugsweise in der Größenordnung von 2 mm, sowie nach Härtung eine Dicke zwischen 5 und 15 µm, vorzugsweise in der Größenordnung von 11 µm besitzt.

## Claims

1. Measuring device comprising a rheoatat-type transducer, in particular for measuring the fuel in the tank of a motor vehicle, in which the rheoatat is formed by a support of electrically insulating material (20) covered by a main path (30) of electrically resistant material, of controlled resistivity, and a plurality of separate, secondary paths (40), made from electrically conducting material, connected in a staggered manner to the main resistive path (30) and each extending in facing relationship to the path of movement of a slide, each of the secondary paths (40) being covered partly by a covering (50) of a material which is more resistant to wear, characterised by the fact that the covering is located in facing relationship to the path of movement of the slide and produced from the same material as the main path (30).

2. Measuring device according to Claim 1, characterised by the fact that the covering (50) is produced by serigraphic deposition on each secondary path (40).

3. Measuring device according to one of Claims 1 and 2, in which in manner known per se, the main path (30) of electrically resistant material is deposited by serigraphy on the secondary paths (40) of electrically conducting material, characterised by the fact that the covering (50) covering each secondary path (40) is produced by simultaneous serigraphic deposition on the secondary paths (40).

4. Measuring device according to one of Claims 1 to 3, characterised by the fact that the covering (50) is produced from a material based on ruthenium oxide.

5. Measuring device according to one of Claims 1 to 4, characterised by the fact that the covering (50) has a resistance of the order of 25 $\Omega/_\square$

6. Measuring device according to one of Claims 1 to 5, characterised by the fact that the covering (50) has a roughness Ra comprised between 0.2 and 0.4 μm.

7. Measuring device according to one of Claims 1 to 6, characterised by the fact that it also comprises a movable arrangement having a pivoting lever provided with a float able to follow the level of a liquid and associated with the slide of the rheostat, and by the fact that the secondary paths (40) are formed by juxtaposed sectors of a ring.

8. Measuring device according to one of Claims 1 to 7, characterised by the fact that the covering (50) deposited on each secondary path has a width comprised between 0.1 and 0.3 mm, preferably being of the order of 0.2 mm, a length comprised between 1 and 3 mm, preferably being of the order of 2 mm, and a thickness comprised between 5 and 15 μm, after baking, preferably being of the order of 11 μm.